# FASCICULE DE BREVET EUROPEEN

(11) **EP 0 789 260 B1**
(45) Date de publication et mention de la délivrance du brevet: **12.05.2004**
(21) Numéro de dépôt: 96400277.8
(22) Date de dépôt: 09.02.1996
(51) Int. Cl.: G02C 5/12

(54) **Coussinet gélatineux à effet de membrane réduit**
Gelatinkissen mit reduziertem Membraneffekt
Gelatinous cushion with reduced membrane effect

(43) Date de publication de la demande: 13.08.1997
(73) Titulaire: FINASSE S.A., 39400 Morez (FR)
(72) Inventeur: Martin, Jean Luc, F-83000 Toulon (FR)
(74) Mandataire: Marchand, André

(56) Documents cités:
- WO-A-85/05700
- WO-A-88/09156
- CH-A- 656 234
- FR-A- 2 326 717
- US-A- 2 021 890
- US-A- 2 032 843
- US-A- 2 216 503
- US-A- 4 731 081
- PATENT ABSTRACTS OF JAPAN vol. 11, no. 89 (C-411), 19 Mars 1987 & JP-A-61 243858 (KIYUUBITSUKU ENG:KK), 30 Octobre 1986,

## Description

La présente invention concerne les coussinets gélatineux comprenant une matière gélatineuse enveloppée dans une fine membrane de protection fixée sur un support. Ces coussinets, d'une structure souple et gélatineuse et d'un toucher doux et soyeux, trouvent diverses applications dans le domaine du confort.

En particulier, on a déjà proposé dans les brevets FR 2326717, WO 85/05700, CH 656234 et US 2032843 de monter de tels coussinets sur une monture de lunettes dans les zones où la monture irrite et blesse l'épiderme, notamment sur les branches de la monture ou dans les zones d'appui nasal. On a également proposé dans FR 2326717 de monter de tels coussinets sur des plaquettes nasales articulées sur une monture de lunette.

D'autre part, de tels coussinets peuvent aussi trouver application dans le domaine industriel, par exemple comme amortisseurs de vibrations.

La présente invention propose d'améliorer les performances de ces coussinets gélatineux, en termes de confort ou d'amortissement des chocs et vibrations.

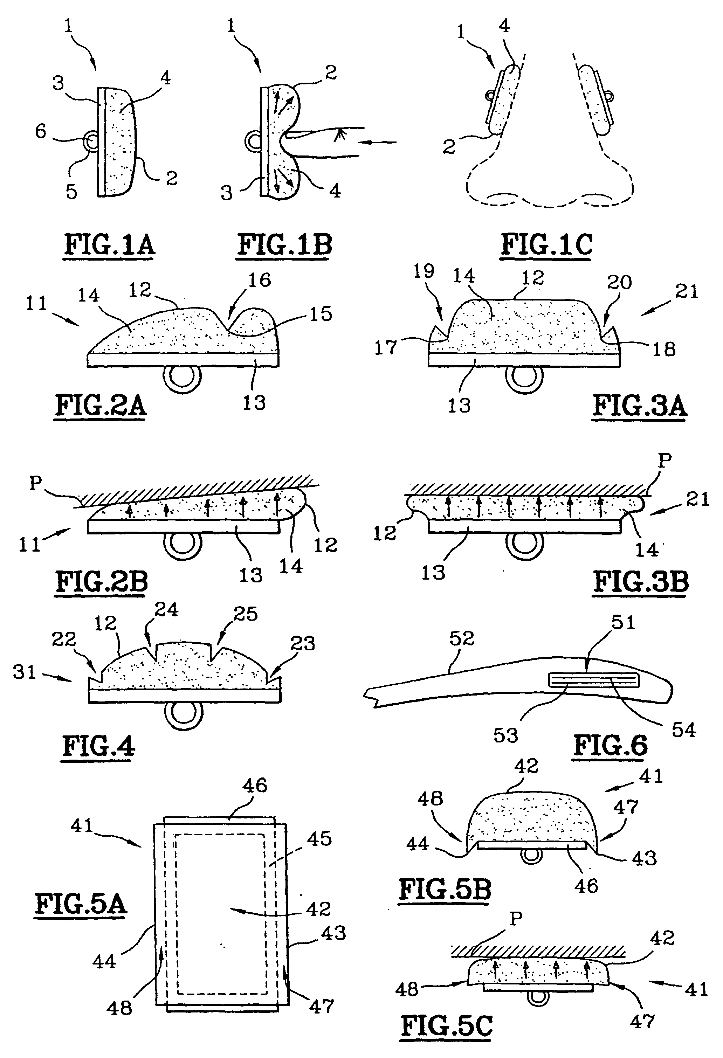

Les figures 1A, 1B et 1C représentent à titre d'exemple une plaquette nasale 1 ayant la structure d'un coussinet gélatineux. La plaquette nasale 1 comprend une membrane fine et élastique 2 soudée ou collée à sa périphérie sur un support 3 rigide ou semi-rigide en forme de plaquette, réalisé en matière plastique. La membrane 2 forme avec une face du support 3 une cavité étanche dans laquelle est emprisonnée une matière gélatineuse 4. Le support 3 comporte sur son autre face une excroissance 5 dans laquelle est pratiqué un trou 6 permettant le montage et l'articulation de la plaquette nasale sur une monture de lunettes.

L'avantage théorique d'une telle plaquette nasale 1 est que, sous l'action d'un écrasement, notamment lorsque la plaquette 1 est en appui sur le nez, la matière gélatineuse 4 est supposée absorber la force d'écrasement, amortir les chocs, et garantir un excellent confort.

Toutefois, si l'on observe plus attentivement le comportement de la plaquette nasale 1, par exemple en l'écrasant au moyen du doigt comme montré en figure 1B, on s'aperçoit au fur et à mesure que l'on accentue la pression sur la plaquette que l'effet gélatineux disparaît peu à peu au profit d'un effet élastique dû à un étirement de la membrane 2 provoqué par la compression de la matière gélatineuse 4 emprisonnée dans la membrane 2. On appellera cet effet élastique "effet de membrane". Ainsi, lorsque la plaquette nasale 1 est en appui sur le nez, comme montré en figure 1C, l'écrasement produit par le poids de la monture est tel que l'effet de membrane est prédominant sur l'effet gélatineux.

En définitive, un coussinet gélatineux de l'art antérieur soumis à un écrasement assez important présente une certaine dureté et ne procure pas un confort supérieur à un coussinet rempli d'un fluide ou d'un gaz, l'effet de membrane étant prédominant. Cet inconvénient n'a pas été découvert dans l'art antérieur ce qui explique pourquoi, dans les brevets précités, il est proposé indifféremment de remplir les coussinets au moyen d'un gel, d'un fluide, ou d'un gaz.

Ainsi, un objet de la présente invention est de prévoir une structure de coussinet gélatineux qui ne présente pas un tel effet de membrane et se distingue des coussinets comprenant un liquide ou un gaz.

Un autre objet de la présente invention est de prévoir une plaquette nasale pour monture de lunettes qui soit très confortable.

Encore un autre objet de la présente invention est de prévoir un coussinet gélatineux qui permette d'amortir efficacement des vibrations mécaniques.

La présente invention repose tout d'abord sur la constatation que, la membrane ayant pour fonction de maintenir la matière gélatineuse sur le support du coussinet et de la protéger contre le déchirement ou l'arrachement, il ne peut être envisagé, afin de supprimer l'effet de membrane décrit ci-dessus, de supprimer la membrane ou de prévoir une membrane lâche et détendue.

Ainsi, la présente invention prévoit un coussinet gélatineux comportant une matière gélatineuse enveloppée au moins partiellement dans une membrane, dans lequel la membrane présente au moins un pli avant écrasement du coussinet, la matière gélatineuse épouse le pli de la membrane, le pli est agencé de manière que la membrane se déplie lorsqu'une pression est exercée sur le coussinet.

Grâce à l'invention, lorsque le coussinet est soumis à un écrasement, la membrane n'offre pas de résistance à la déformation de la matière gélatineuse. La matière gélatineuse peut se déformer sans étirement de la membrane et atteindre l'état de compression qui lui permet d'absorber seule la force d'écrasement.

Selon un mode de réalisation, le pli de la membrane est orienté vers l'intérieur du coussinet.

Dans ce cas, comme la matière gélatineuse épouse la forme du pli, le pli forme une fente ou encoche à la surface du coussinet.

Selon un mode de réalisation, le pli de la membrane est orienté vers l'extérieur du coussinet, et forme une excroissance de la membrane qui gonfle sous l'effet de l'écrasement.

La membrane peut être fixée sur un support rigide ou semi-rigide. C'est le cas notamment avec un coussinet de plaquette nasale.

Elle peut aussi être soudée à une deuxième membrane, fine ou épaisse, formant le dessous du coussinet, ou être fixée directement sur un objet qui porte le coussinet, par exemple une branche d'une monture de lunettes ou la zone d'appui nasal d'une monture.

Avantageusement, la matière gélatineuse est un gel de silicone.

Avantageusement, la membrane est un film de polyuréthane.

La présente invention concerne également un procédé de fabrication d'un coussinet gélatineux comprenant les étapes consistant à former dans un moule un film souple de type polyuréthane, remplir le moule avec une préparation liquide se transformant en gel après polymérisation, appliquer un support de coussinet sur le film de manière à couvrir la cavité du moule, souder le film sur le support à la périphérie de la cavité et découper le film pour détacher le coussinet.

Ces objets, caractéristiques et avantages ainsi que d'autres de la présente invention apparaîtront plus clairement à la lecture de la description suivante de divers exemples de réalisation de coussinets selon l'invention et d'un procédé de fabrication de ces coussinets, en relation avec les figures jointes parmi lesquelles :
- les figures 1A, 1B, 1C ont déjà été décrites et représentent sous la forme d'une plaquette nasale un coussinet de l'art antérieur,
- les figures 2A et 2B sont des vues en coupe d'un mode de réalisation d'un coussinet selon l'invention prenant la forme d'une plaquette nasale, et montrent la forme du coussinet avant et après écrasement,
- les figures 3A et 3B sont des vues en coupe d'une variante de réalisation du coussinet de la figure 2A, et montrent la forme du coussinet avant et après écrasement,
- la figure 4 est une vue en coupe d'une autre variante de réalisation du coussinet de la figure 2A,
- la figure 5A est une vue de dessus et la figure 5B une vue en coupe d'un autre mode de réalisation d'un coussinet selon l'invention formant une plaquette nasale, et la figure 5B montre la forme du coussinet après écrasement,
- la figure 6 représente une branche d'une monture de lunette sur laquelle est disposé un coussinet selon l'invention,
- les figures 7A, 7B et 7C représentent un procédé de fabrication d'un coussinet selon l'invention.

Les figures 2A et 2B représentent par une vue en coupe longitudinale un coussinet 11 selon l'invention, prenant ici la forme d'une plaquette nasale pour monture de lunettes. Le coussinet 11 comprend, comme la plaquette nasale de la figure 1A, une membrane 12 enveloppant une matière gélatineuse 14 et fixée à sa périphérie sur un support 13, par soudage ou collage.

La membrane 12 est par exemple un film de polyuréthane ou de polyamide et la matière gélatineuse 14 un gel de silicone ou de polyuréthane. La membrane 12 peut présenter une épaisseur allant de quelques dizaines de micromètres à la centaine de micromètres.

Selon l'invention, la membrane 12 présente un pli 15 orienté vers l'intérieur du coussinet 11 et disposé transversalement. Le gel 14 épouse la forme du pli 15 de telle sorte que le coussinet 11 présente, vu de dessus, une fente ou encoche transversale 16 d'une profondeur de l'ordre du quart à la moitié de l'épaisseur du coussinet 11.

La figure 2B représente le coussinet 11 soumis à un écrasement selon un plan d'écrasement P parallèle ou sensiblement parallèle au support 13. Le plan P représente par exemple la partie osseuse du nez, sur lequel vient s'appuyer le coussinet 11. On voit que sous l'effet de la pression le gel 14 occupe l'espace laissé libre par la fente 16 et que la membrane 12 est dépliée dans la zone où se trouvait le pli 15. Ainsi, avantageusement, la membrane 12 n'est pas tendue ou se trouve à la limite de l'état de tension élastique. Dans ces conditions, la réaction du coussinet 11 à l'écrasement est assurée par le gel 14, comme représenté par des flèches, et la sensation élastique due à l'effet de membrane des coussinets de l'art antérieur est supprimée. En pratique, on ressent très distinctement l'amélioration apportée par la présente invention lorsque l'on écrase alternativement au moyen du doigt un coussinet de l'art antérieur et un coussinet selon l'invention, le premier se durcissant rapidement alors que l'autre reste souple. Des essais comparatifs réalisés par la demanderesse sur des montures de lunettes équipées de plaquettes nasales selon l'invention et de plaquettes nasales classiques ont confirmé les avantages de l'invention, et ont montré qu'à l'usage, le confort apporté par les plaquettes nasales selon l'invention est appréciable.

Bien entendu, le coussinet selon l'invention doit reprendre sa forme initiale après écrasement. Il convient ainsi de donner au gel 14 une composition chimique garantissant l'élasticité nécessaire, mais cette opération ne présente aucune difficulté pour l'homme de l'art, les gels disponibles dans le commerce et notamment les gels de silicone ayant un pouvoir de déformation élastique très élevé. Par ailleurs, on notera que la membrane 12 reste solidaire du gel 14 par effet de ventouse lorsque celui-ci reprend sa forme initiale, de sorte que le pli 16 se reforme après écrasement.

Les figures 3A et 3B représentent une variante préférée 21 du coussinet qui vient d'être décrit, pour la réalisation de plaquettes nasales. Le coussinet 21 est vu en coupe transversale et sa membrane 12 présente deux plis longitudinaux symétriques 17, 18, disposés près des bords du coussinet 21 et orientés vers l'intérieur. Vu de dessus, les deux plis 17, 18 forment deux fentes longitudinales 19, 20, par exemple des fentes d'une profondeur de l'ordre du tiers de l'épaisseur du coussinet 21. Lorsque le coussinet 21 est écrasé selon le plan d'écrasement P représenté, la membrane 12 se déplie et prend l'aspect d'un champignon aplati comme montré en figure 3B.

L'homme de l'art notera que la suppression de l'effet de membrane dans un coussinet selon l'invention dépend de la pression appliquée au coussinet. Si une pression extrême est appliquée, il est évident que l'effet de membrane peut réapparaître après une étape de compression de la matière gélatineuse, la présente invention permettant seulement de retarder le moment ou la membrane va se trouver dans un état d'étirement élastique. Ainsi, il faut tenir compte au moment de la conception d'un coussinet selon l'invention de l'utilisation qui va être faite du coussinet et de l'importance de la force d'écrasement qui va s'exercer, afin de donner au coussinet et à la matière gélatineuse la forme, la taille et la composition chimique qui conviennent le mieux.

La figure 4 représente une autre variante 31. Le coussinet 31 est vu en coupe transversale et sa membrane 12 comprend ici quatre plis orientés vers l'intérieur formant quatre fentes 22, 23, 24, 25 parallèles longitudinales, les fentes 22, 23 étant disposées symétriquement à proximité des bords du coussinet 31 et les fentes 24, 25 symétriquement à proximité du sommet de la membrane 12.

Les figures 5A et 5B représentent un mode de réalisation d'un coussinet 41 selon l'invention dans lequel la membrane 42 présente deux plis longitudinaux 43, 44 orientés vers l'extérieur. Le coussinet 41 est vu de dessus en figure 5A et en coupe transversale en figure 5B. Sur la figure 5A, on a représenté en traits pointillés la zone 45 de soudure périphérique de la membrane 42 sur le support 46 du coussinet 41. On voit que le coussinet 41 présente deux excroissances 47, 48 qui débordent du support 46. Sur la vue en coupe de la figure 5B, on voit que les deux plis 43, 44 forment les extrémités des excroissances 47, 48. La vue en coupe de la figure 5C montre que les deux excroissances 47, 48 ont tendance à gonfler lorsque le coussinet 41 est soumis à un écrasement, de sorte que l'effet de membrane est également supprimé avec ce mode de réalisation.

Sur la figure 6, on a représenté à titre d'exemple une autre application d'un coussinet 51 selon l'invention. Ce coussinet 51 de forme allongée est collé ou soudé sur une branche 52 de monture de lunette. On distingue à la surface du coussinet 51 deux fentes longitudinales 53, 54 qui lui confèrent les avantages de l'invention. Le coussinet 51 peut être fixé en divers points de la branche 52, soit sur la face interne de la branche 52 comme montré sur la figure, soit sur la partie inférieure de la branche 52 venant s'appuyer sur le pavillon de l'oreille.

Ici, le support du coussinet 51 n'est pas forcément une plaquette en matière plastique rigide ou semi-rigide. Le dessous du coussinet 51 peut être une deuxième membrane, fine ou épaisse, sur laquelle est soudée la membrane enveloppant la matière gélatineuse. Cette deuxième membrane formant support peut être collée sur la branche 52, ou peut prendre la forme d'une chaussette enfilée sur la branche de lunettes. Encore une autre variante consiste à souder directement la membrane enveloppant la matière gélatineuse sur la branche 52, dont la surface forme alors le support du coussinet 51.

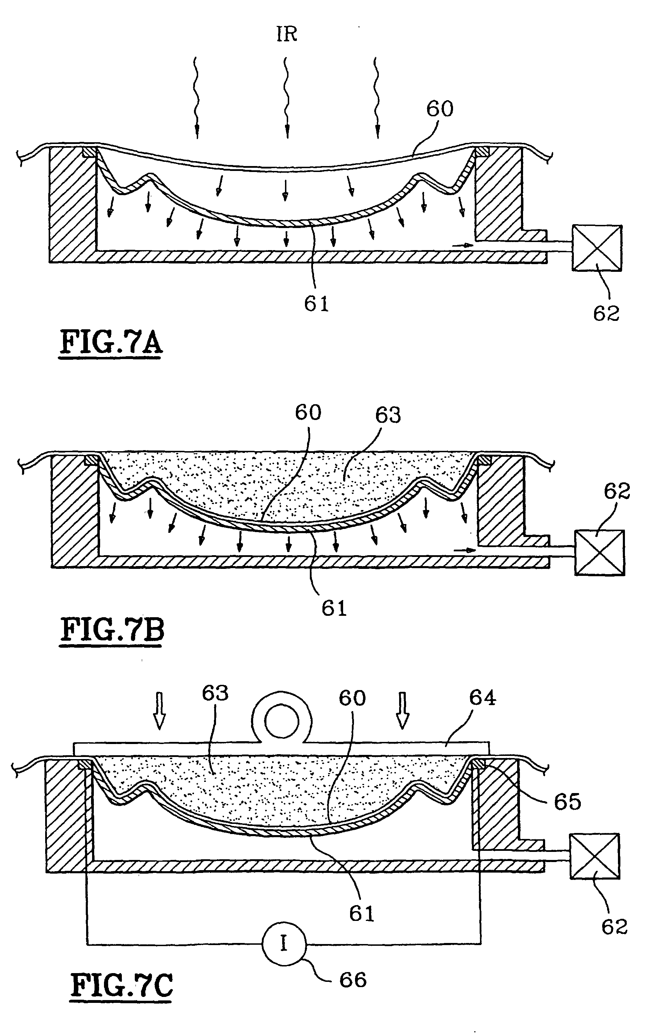

Les figures 7A, 7B et 7C représentent un exemple de procédé de fabrication d'un coussinet selon l'invention.

Au cours d'une étape préliminaire illustrée par la figure 7A, on met en forme un film de polyuréthane 60 dans un moule poreux 61 relié à un système d'aspiration 62. Le film 60 est préalablement ramolli par une source de chaleur, par exemple un rayonnement infrarouge IR, puis le système d'aspiration 62 est activé. Le film 60 est aspiré et plaqué au fond du moule 61 auquel on a donné la forme désirée, ici la forme du coussinet à deux plis de la figure 3A.

Au cours d'une étape suivante illustrée par la figure 7B, l'aspiration est maintenue et le moule 61 est rempli d'une préparation liquide 63 à deux ou trois composants qui va se transformer en gel après le temps nécessaire à la réaction chimique. Lorsque la polymérisation est achevée, la forme particulière donnée au film 60 est figée par le gel 63 et l'aspiration arrêtée. On a réalisé un coussinet gélatineux selon l'invention, qu'il ne reste plus qu'à souder sur un support.

Ainsi, au cours d'une étape illustrée par la figure 7C, un support 64 est disposé sur le film 60 de manière à couvrir entièrement le moule 61. Sur la figure, le support 64 représenté est un support en matière plastique de plaquette nasale mais ce support pourrait tout aussi bien être une deuxième membrane, ou encore l'objet sur lequel on veut fixer le coussinet, par exemple une branche de lunette. La soudure du film 60 sur le support 64 est assurée ici par un anneau résistif plat 65 enchâssé dans le moule 61, au bord de l'orifice de thermoformage de la membrane 60. L'anneau résistif 65 est relié à une source d'alimentation 66 délivrant un courant I et est porté à une température de l'ordre de 180 à 200°C pendant un certain temps (en général quelques dixièmes de secondes suffisent). Au cours de l'opération de soudure, une force d'appui assez importante est appliquée au support 64 afin de chasser le gel 63 qui pourrait se trouver entre le film 60 et le support 64. Si le support à souder est une simple membrane, on peut utiliser un plateau presseur.

La dernière étape du procédé de fabrication n'est pas représentée et consiste à découper le film 60 afin de détacher le coussinet. La découpe est réalisée de façon classique, par exemple par ultrasons, au moyen de couteaux, etc.

Il apparaîtra clairement à l'homme de l'art que le procédé qui vient d'être décrit se prête bien à une fabrication collective de coussinets, notamment grâce à la prévision d'un moule comportant une pluralité de cavités de thermoformage.

On a décrit dans ce qui précède des applications de coussinets selon l'invention à une monture de lunettes. Il est bien évident que de tels coussinets sont susceptibles de nombreuses autres applications et modes de réalisations. Outre leurs avantages en matière de confort, les coussinets selon l'invention présentent également des propriétés avantageuses en matière d'amortissement, grâce à la suppression de l'effet de membrane, et peuvent être utilisés dans des applications purement techniques. En particulier, la demanderesse envisage de disposer de tels coussinets dans des systèmes d'éclairage afin de supprimer les ronflements à la fréquence du secteur créés par les lampes au néon.

## Revendications

1. Coussinet (11, 21, 31, 41, 51) gélatineux comportant une matière gélatineuse (14) enveloppée au moins partiellement dans une membrane (12, 42), **caractérisé en ce que** :
- la membrane (12,42) présente une forme initiale avec au moins un pli avant écrasement du coussinet(15,17,18,22,23,24,25,43,44,53,54),
- la matière gélatineuse (14) épouse le pli de la membrane,
- le pli est agencé de manière que la membrane se déplie lorsqu'une pression est exercée sur le coussinet, et après écrasement la menbrane reprend sa forme initiale et le pli se reforme.

2. Coussinet (11, 21, 31, 51) selon la revendication 1, **caractérisé en ce que** ledit pli (15, 17, 18) de la membrane (12) est orienté vers l'intérieur du coussinet, et forme une fente (16, 19, 20, 22, 23, 24, 25) à la surface du coussinet.

3. Coussinet (41) selon la revendication 1, **caractérisé en ce que** ledit pli (43, 44) de la membrane (42) est orienté vers l'extérieur du coussinet, et forme une excroissance (47, 48) de la membrane qui gonfle sous l'effet de l'écrasement.

4. Coussinet (21, 31, 41, 51) selon l'une des revendications 1 à 3, **caractérisé en ce qu'**il comprend au moins deux plis (17, 18, 22, 23, 24, 25, 43, 44, 53, 54) disposés de façon symétrique.

5. Coussinet selon l'une des revendications 1 à 4, **caractérisé en ce que** la membrane (12, 42) est fixée sur un support (13, 46) rigide ou semi-rigide.

6. Coussinet (51) selon l'une des revendications 1 à 4, **caractérisé en ce que** la membrane est soudée à une deuxième membrane formant le dessous du coussinet.

7. Coussinet (51) selon l'une des revendications 1 à 4, **caractérisé en ce que** la membrane est fixée directement sur un objet (52) qui porte le coussinet (51).

8. Coussinet selon l'une des revendications précédentes, **caractérisé en ce que** la membrane (12, 42) est un film de polyuréthane.

9. Coussinet selon l'une des revendications précédentes, **caractérisé en ce que** ladite matière gélatineuse (14) est un gel de silicone.

10. Procédé de fabrication d'un coussinet gélatineux selon l'une des revendications précédentes, comprenant les étapes consistant à former dans un moule (61) un film souple (60) de type polyuréthane, remplir le moule (61) avec une préparation liquide (63) se transformant en gel après polymérisation, appliquer un support (64) de coussinet sur le film de manière à couvrir la cavité du moule (61), souder le film (60) sur le support (64) à la périphérie de la cavité du moule (61) et découper le film (60) pour détacher le coussinet.

## Patentansprüche

1. Gelatinekissen (11, 21, 31, 41, 51) mit einem zumindest teilweise von einer Membran (12, 42) umhüllten gelatinösen Stoff (14), **dadurch gekennzeichnet, dass**
- die Membran (12, 42) eine ursprüngliche Form mit mindestens einer Falte vor dem Zusammendrücken des Kissens (15, 17, 18, 22, 23, 24, 25, 43, 44, 53, 54) aufweist,
- der gelatinöse Stoff (14) sich der Membranfalte anpasst,
- die Falte derart angeordnet ist, dass die Membran sich bei Ausübung eines Drucks auf das Kissen entfaltet, und
- nach dem Zusammendrücken die Membran ihre ursprüngliche Form wieder einnimmt und die Falte sich wieder bildet.

2. Kissen (11, 21, 31, 51) nach Anspruch 1, **dadurch gekennzeichnet, dass** die besagte Falte (15, 17, 18) der Membran (12) zum Inneren des Kissens hin gerichtet ist und einen Spalt (16, 19, 20, 22, 23, 24, 25) an der Kissenoberfläche bildet.

3. Kissen (41) nach Anspruch 1, **dadurch gekennzeichnet, dass** die besagte Falte (43, 44) der Membran (42) zum Äußeren des Kissens gerichtet ist und eine Ausstülpung (47, 48) der Membran bildet, die sich unter der Einwirkung des Zusammendrückens aufbläht.

4. Kissen (21, 31, 41, 51) nach einem der Ansprüche 1 bis 3, **dadurch gekennzeichnet, dass** es mindestens zwei symmetrisch angeordnete Falten (17, 18, 22, 23, 24, 25, 43, 44, 53, 54) aufweist.

5. Kissen nach einem der Ansprüche 1 bis 4, **dadurch gekennzeichnet, dass** die Membran (12, 42) auf einem starren oder halbstarren Träger (13, 46) befestigt ist.

6. Kissen (51) nach einem der Ansprüche 1 bis 4, **dadurch gekennzeichnet, dass** die Membran mit einer zweiten, die Unterseite des Kissens bildenden Membran verschweißt ist.

7. Kissen (51) nach einem der Ansprüche 1 bis 4, **dadurch gekennzeichnet, dass** die Membran unmittelbar auf einem das Kissen (51) tragenden Gegenstand (52) befestigt ist.

8. Kissen nach einem der vorangehenden Ansprüche, **dadurch gekennzeichnet, dass** die Membran (12, 42) eine Polyurethanfolie ist.

9. Kissen nach einem der vorangehenden Ansprüche, **dadurch gekennzeichnet, dass** der gelatinöse Stoff (14) ein Silikongel ist.

10. Verfahren zur Herstellung eines Gelatinekissens nach einem der vorangehenden Ansprüche, mit folgenden Schritten:
- Ausformen einer flexiblen Polyurethan-Folie (60) in einer Form (61),
- Einfüllen eines flüssigen Präparats (63) in die Form (61), welches nach Polymerisation zu Gel wird,
- Auflegen eines Kissenträgers (64) auf die Folie derart, dass der Hohlraum der Form (61) abgedeckt wird,
- Verschweißen der Folie (60) am Träger (64) am Umfang des Hohlraums der Form (61), und
- Zerschneiden der Folie (60), um das Kissen herauszulösen.

## Claims

1. Gelatinous cushion (11, 21, 31, 41, 51) comprising a gelatinous material (14) at least partially encased in a membrane (12, 42), **characterised in that** :
- the membrane (12, 42) has an initial shape with at least one fold before the cushion (15, 17, 18, 22, 23, 24, 25, 43, 44, 53, 54) is compressed,
- the gelatinous material (14) conforms to the fold in the membrane,
- the fold works in such a way that the membrane unfolds when pressure is exerted on the cushion, and after compression the membrane returns to its initial shape and the fold reforms.

2. Cushion (11, 21, 31, 51) according to claim 1, **characterised in that** the said fold (15, 17, 18) in the membrane (12) is directed towards the inside of the cushion, and forms a groove (16, 19, 20, 22, 23, 24, 25) on the surface of the cushion.

3. Cushion (41) according to claim 1, **characterised in that** the said fold (43, 44) in the membrane (42) is directed towards the outside of the cushion, and forms an excrescence (47, 48) in the membrane which inflates under the effect of compression.

4. Cushion (21, 32, 41, 51) according to one of claims 1 to 3, **characterised in that** it comprises at least two folds (17, 18, 22, 23, 24, 25, 43, 44, 53, 54) which are symmetrically arranged.

5. Cushion according to one of claims 1 to 4, **characterised in that** the membrane (12, 42) is fixed on a rigid or semi-rigid support (13, 46).

6. Cushion (51) according to one of claims 1 to 4, **characterised in that** the membrane is welded to a second membrane forming the underneath of the cushion.

7. Cushion (51) according to one of claims 1 to 4, **characterised in that** the membrane is fixed directly onto an object (52) which bears the cushion (51).

8. Cushion according to one of the preceding claims, **characterised in that** the membrane (12, 42) is a polyurethane film.

9. Cushion according to one the preceding claims, **characterised in that** the said gelatinous material (14) is a silicone gel.

10. Method of manufacturing a gelatinous cushion according to one of the preceding claims, comprising steps consisting of forming, in a mould (61), a flexible film (60) of the polyurethane type, filling the mould (61) with a liquid preparation (63) which transforms into a gel after polymerisation, applying a cushion support (64) on to the film so as to cover the cavity in the mould (61), welding the film (60) on to the support (64) at the edge of the cavity in the mould (61) and cutting the film (60) to remove the cushion.
